# EUROPÄISCHE PATENTSCHRIFT

(11) **EP 0 963 463 B1**
(45) Veröffentlichungstag und Bekanntmachung des Hinweises auf die Patenterteilung: **29.08.2001**
(21) Anmeldenummer: 98913590.0
(22) Anmeldetag: 25.02.1998
(51) Int. Cl.: C25D 21/12, C25D 5/16, H01M 4/04, H01M 4/29, C25D 21/14

(54) **VERFAHREN UND VORRICHTUNG ZUM HERSTELLEN EINER ELEKTRODENSCHICHT**
METHOD AND DEVICE FOR MAKING LAYER ELECTRODES
PROCEDE ET DISPOSITIF DE FABRICATION D'ELECTRODES EN COUCHE

(30) Priorität: 28.02.1997 DE 19708208
(43) Veröffentlichungstag der Anmeldung: 15.12.1999
(73) Patentinhaber: ZOXY Energy Systems AG, 09633 Halsbrücke (DE); EnBW Regional GmbH, 76131 Karlsruhe (DE); Stadtwerke Karlsruhe GmbH, 76127 Karlsruhe (DE)
(72) Erfinder: PAULING, Hans Jürgen, D-75038 Oberderdingen (DE)
(74) Vertreter: Heim, Hans-Karl, Dipl.-Ing.
(86) Internationale Anmeldenummer: EP9801071
(87) Internationale Veröffentlichungsnummer: WO9838356

(56) Entgegenhaltungen:
- EP-A- 0 524 748
- US-A- 4 554 056
- PATENT ABSTRACTS OF JAPAN vol. 006, no. 024 (C-091), 12. Februar 1982 & JP 56 146900 A (NIPPON STEEL CORP), 14. November 1981

## Beschreibung

Die Erfindung betrifft ein Verfahren zum Herstellen einer Schicht für eine Elektrode gemäß Anspruch 1 und ferner eine Vorrichtung zum Herstellen einer Schicht für eine Elektrode gemäß dem Oberbegriff des Anspruchs 15.

Batterien und Batterieanordnungen werden in zunehmendem Maße zur primären und sekundären Energieversorgung wichtig. Diese steigende Relevanz liegt nicht zuletzt in den immer stärker werdenden Anforderungen in bezug auf Umweltverträglichkeit der Energieversorgungssysteme im Sinne von Emissionsschutz und Wiederverwendbarkeit oder Wiederverwertbarkeit von Rohstoffen und von Energie.

Dies betrifft zum einen die Endverbraucher und somit die privaten Haushalte, zum anderen aber werden auch öffentliche Einrichtungen und dort insbesondere der Bereich Infrastruktur und Verkehr mit umweltverträglicheren Energiequellen ausgerüstet. Bereits heute werden sowohl mobile Einrichtungen wie z.B. tragbare Kleinstgeräte aber auch Fahrzeuge, insbesondere Straßenfahrzeuge oder auch Schienen- oder Wasserfahrzeuge, mit umweltfreundlichen und wiederverwertbaren oder wiederaufladbaren Energieträgern in Form von Akkumulatoren oder Batterien ausgerüstet. Des weiteren finden derartige Energieträger in Form von Batterieanordnungen oder Batteriesystemen auch in immobilen Einrichtungen, wie z.B. Stand-Alone-Geräten oder auch als Notstromquellen immer größere Anwendung.

Im Bereich des privaten Endkunden aber auch bei öffentlichen Einrichtungen werden vermehrt insbesondere Metall/ Luftsauerstoff-Batterien als wiederaufladbare Primärbatterien z. B. bei Hörgeräten oder Herzschrittmachern bzw. in der Nachrichtentechnik und bei Signalanlagen verwendet.

Bei der Weiterentwicklung vorhandener Elektrodensysteme für Batterien, Batterieandordnungen und insbesondere auch für wiederaufladbare Akkumulatoren wird in zunehmendem Maße Wert darauf gelegt, die Eigenschaften der elektrochemisch aktiven Schicht dieser Elektroden bei deren Primärproduktion in wohldefinierter und vorbestimmter Art und Weise steuern zu können. Je nach Anwendungsgebiet werden also ganz spezifische Anforderungen an die Elektrode bzw. an die elektrochemisch aktive Schicht einer Elektrode gestellt, zu deren Erfüllung schon bei der Produktion spezifische Bedingungen eingehalten werden müssen.

Dies betrifft zum einen die Oberflächenstruktur der elektrochemisch aktiven Schicht und zum anderen z. B. die konkrete Zusammensetzung der elektrochemisch aktiven Schicht.

Aus diesen primären Eigenschaften der Elektrode bzw. der elektrochemisch aktiven Schicht resultieren sekundäre Eigenschaften wie die lieferbare Energiedichte, d. h. das Verhältnis von zur Verfügung stehender Energie zur Gesamtmasse, die Umweltverträglichkeit, die mögliche Zyklenzahl der Wiederaufladbarkeit, die mechanische und/oder chemische Stabilität der Batterie und insbesondere der Elektroden im Betriebs- oder auch im Ruhezustand sowie viele weitere physikalische und chemische Eigenschaften.

Bei der Herstellung der elektrochemisch aktiven Schicht einer Elektrode, die in der Regel in einem elektrolytischen Abscheideverfahren durchgeführt wird, kommt es in bezug auf die möglichen Eigenschaften der elektrochemisch aktiven Schicht der Elektrode ganz wesentlich auf den zeitlichen Verlauf von elektrischem Strom und elektrischer Spannung an. Diese elektrischen Parameter bestimmen die Abscheide- oder Wachstumsgeschwindigkeit der Elektrodenschicht.

Zum anderen ist aber auch die Zusammensetzung des Elektrolyten, in dem das elektrolytische Abscheideverfahren durchgeführt wird, und insbesondere gerade auch die Veränderung der Elektrolytzusammensetzung von entscheidender Bedeutung. Bei der elektrolytischen Abscheidung werden aus dem Elektolyten bestimmte Stoffe verbraucht und/oder in den Elektrolyten abgegeben, wodurch sich die Elektrolytzusammensetzung während des Abscheideverfahrens permanent ändert. Dies kann unter Umständen einen erheblichen Einfluss auf die Qualität der elektrochemisch aktiven Schicht der Elektrode haben.

Man kann das Abscheiden bzw. das Wachstum der elektrochemisch aktiven Schicht auch durch bestimmte Stoffzusätze in den Elektrolyten beeinflussen, wobei aber insbesondere diese Elektrolytzusätze nicht oder nur wenig an der Abscheidung selbst beteiligt sind, diese aber steuern.

Um die Grundbestandteile eines Elektrolyten bzw. die Elektrolytzusätze in ihrer Konzentration einzustellen, wurden bisher im wesentlichen mechanische Zumischverfahren verwendet, welche durch zeitlich beabstandete Stichprobenentnahmen und entsprechende Konzentrationsmessungen unterstützt wurden.

Bei diesen herkömmlichen Verfahren zur Einstellung der Konzentrationen der einzelnen Elektrolytbestandteile und -zusätze besteht ein großes Problem darin, dass eine derartige Konzentrationseinstellung nur höchst ungenau und oft mit erheblicher zeitlicher Verzögerung durchgeführt werden kann.

Deshalb treten bei den herkömmlichen Einstellungsverfahren unerwünschte und oft schädliche Konzentrationsschwankungen auf, die insbesondere bei Abscheideverfahren, die in einem kritischen Konzentrations-Grenzbereich durchgeführt werden, zu oft mangelhaften Oberflächenstrukturen oder anderen Eigenschaften der elektrochemisch aktiven Elektrodenschicht führen können.

In der US-PS 4,554,056 wird die elektrolytische Herstellung von Nickel-Elektroden für Batterien beschrieben. Als aktive Masse der Nickel-Kathoden wird Nickelhydroxid eingesetzt, welches elektrolytisch auf einer porösen Platte abgeschieden wird, wobei diese Platte imprägniert wird. Zur pH-Wert-Regelung des Elektrolyten, welcher in einem Bereich von 1,8 bis 3,5 liegen sollte, wird die Bildung des Nickelhydroxids an einer Nickel-Anode über einen ersten Stromkreis bewirkt und durch Schließen eines zweiten Stromkreises unterbrochen. Beim Betrieb des ersten Stromkreises geht Nickel von der Nickel-Anode unter Bildung von Nickelhydroxid in Lösung und wird an der porösen Kathode abgeschieden. Da dabei der pH-Wert ansteigt, wird bei Erreichen eines kritischen pH-Wertes der erste Stromkreis unterbrochen, der zweite Stromkreis geschlossen und unter Fortsetzung der Abscheidung von Nickelhydroxid und Imprägnierung der porösen Kathode der pH-Wert gesenkt, da kein weiteres Nickelhydroxid nachgeliefert wird. Indem die Nickelhydroxid-Abscheidung an der Kathode bei geschlossenem zweiten Stromkreis mit einer zusätzlichen, jedoch nicht löslichen Elektrode erfolgt, wird der pH-Wert gesenkt. Bei den zwei beschriebenen Varianten besteht entweder die erste Anode oder die zweite Anode aus einem inerten Material, beispielsweise platiniertem Titanium. Die vorgesehene Zusatzelektrode ist zur Senkung des pH-Wertes ohne Abgabe und/oder Aufnahme von Elektrolytzusätzen wirksam.

Die EP 0 524 748 A1 betrifft ein Verfahren zum Metallisieren, beispielsweise zum Verzinnen, bei welchem entsprechend der aufzubringenden Metallisierungsschicht ein Metall einer lösbaren Anode in einem Metallisierungsbad in Lösung geht. Um eine möglichst hohe Lösungsrate zu erreichen, wird als Gegenelektrode eine mit einem Edelmetalloxid beschichtete Elektrode eingesetzt. Um die Auffrischung, Ergänzung oder Nachfüllung des Metallions in dem Metallisierungsbad zu erreichen und einen Niederschlag des in Lösung gegangenen Metallions an der Gegenelektrode zu vermeiden, wird das Potential der Gegenelektrode unter Benutzung einer Referenzelektrode gemessen, welche aus demselben Material wie die lösbare Elektrode besteht.

Der Erfindung liegt die **Aufgabe** zugrunde, ein Verfahren und eine Vorrichtung zum Herstellen einer Schicht für eine Elektrode durch elektrolytisches Abscheiden zu schaffen, bei welchen die Eigenschaften der Schicht besonders einfach, genau und in vordefinverter Art und Weise gewählt und kontrolliert werden können.

Verfahrensmäßig wird die Aufgabe erfindungsgemäß durch ein Verfahren nach Anspruch 1 oder Anspruch 2 gelöst. Vorrichtungsmäßig wird die Aufgabe erfindungsgemäß durch eine Vorrichtung mit den Merkmalen des Anspruchs 15 gelöst. Vorteilhafte Weiterbildungen der erfindungsgemäßen Verfahren bzw. der erfindungsgemäßen Vorrichtung sind jeweils Gegenstand der Unteransprüche.

Ein erfindungsgemäßes Verfahren zum Herstellen einer Schicht für eine Elektrode geht von den aufeinanderfolgenden Schritten des Einbringens einer Abscheideträger-Elektrode in einen Elektrolytraum, welcher mit einem Elektrolyten gefüllt ist und eine Gegenelektrodenanordnung aufweist, einem elektrischen Verbinden der Abscheideträger-Elektrode mit der Gegenelektrodenandordnung über eine Strom-/Spannungsquelle, einem darauffolgenden elektrolytischen Abscheiden einer Schicht an der Abscheideträger-Elektrode sowie Trennen der beschichteten Abscheideträger-Elektrode von der Gegenelektrodenanordnung und abschließendem Entnehmen der beschichteten Abscheideträger-Elektrode aus dem Elektrolytraum aus, wobei das elektrolytische Abscheiden der Schicht an der Abscheideträger-Elektrode durch Beaufschlagen zumindest der Abscheideträger-Elektrode und der Gegenelektrodenanordnung mit elektrischen Strom und/oder einer elektrischen Spannung für eine vorbestimmte Zeit erfolgt und die Zusammensetzung und/oder der Aufbau der sich an der Abscheideträger-Elektrode abscheidenden Schicht durch Elektrolytzusätze gesteuert wird.

Erfindungsgemäß werden die Elektrolytzusätze über Zusatzelektroden im Elektrolytraum aufgenommen und/oder abgegeben und zeitlich gesteuert und die abgeschiedene Schicht wird von der Abscheideträger-Elektrode entfernt und auf einen separaten Träger übertragen und verpresst.

Alternativ kann die abgeschiedene Schicht an der Abscheideträger-Elektrode verpresst werden.

Ein Kerngedanke des erfindungsgemäßen Verfahrens zum Herstellen einer Schicht für eine Elektrode besteht darin, während des Abscheideprozesses permanent die Konzentrationen der Elektrolytzusätze und/oder -bestandteile zu steuern und dadurch die Bedingungen, unter denen der Abscheideprozess durchgeführt wird, in gewünschter Art und Weise anzupassen und zu regeln und die Elektrolytzusätze über Zusatzelektroden, welche sich im Elektrolytraum befinden, einzustellen, indem diese Zusätze aus der Lösung des Elektrolyten in die feste Phase der Zusatzelektroden übergehen oder aber aus der festen Phase der Zusatzelektroden in den Elektrolyten hinein in Lösung gehen. Es ist somit ein gezieltes und gesteuertes Anreichern und Abreichern erreichbar.

Wenn an einem bestimmten bevorzugten Trägerstoff eine bestimmte elektrochemisch aktive Elektrodenschicht gewünscht wird, der gewünschte Trägerstoff für eine Teilnahme am Abscheidungsprozess nicht geeignet ist, ist es nach einer erfindungsgemäßen Verfahrensvariante vorgesehen, dass die abgeschiedene, insbesondere dendritisch gewachsene, Schicht von der Abscheideträger-Elektrode entfernt wird und dass die entfernte Schicht auf einen separaten Träger, nämlich dem gewünschten Träger, übertragen und aufgebracht wird, wobei eine Verpressung stattfindet. So kann z.B. dendritisch gewachsenes Zink entweder bereits innerhalb des Elektrolytbads oder aber nach Fertigstellung der Gesamtschicht nach Abtrennung der Abscheideträger-Elektrode abgeschlagen, gesammelt, gewaschen und dann an einem gewünschten Träger durch Verpressen aufgebracht werden.

Es ist vorteilhaft, wenn zum Komprimieren bzw. Verpressen ein Druck von etwa 5 bis 250 kg/cm² verwendet wird.

Die Startkonzentrationen, insbesondere der Elektrolytzusätze, können dabei zunächst durch mechanisches Zudosieren voreingestellt werden.

Es ist von Vorteil, dass die Abscheidebedingungen derart gewählt werden können, dass die Schicht auf der Abscheideträger-Elektrode durch dendritisches Wachstum, in Form einer porösen Schicht oder in kompakter Form abgeschieden wird.

Eine besonders einfache Kontrolle der Bedingungen im Elektrolyten ergibt sich, wenn die Abscheideträger-Elektrode, die Gegenelektrodenanordnung und/oder die Zusatzelektroden, insbesondere in bezug auf ihre elektrischen Parameter, mit Bezug auf eine Referenzelektrodenanordnung gesteuert und eingestellt werden.
Eine derartige Referenzelektrodenanordnung bildet somit ein festes, sich nicht veränderndes Bezugssysem, das während des gesamten Abscheideprozesses im wesentlichen konstante Eigenschaften besitzt, auch wenn sich der Elektrolyt selbst in seiner Zusammensetzung ändern sollte.

Bei der Steuerung und Kontrolle des Abscheideprozesses und der Elektrolyteigenschaften ist es insbesondere sinnvoll und vorteilhaft, dass das Einstellen der Abscheideträger-Elektrode, der Gegenelektrodenanordnung und der Zusatzelektroden aufeinander, insbesondere in bezug auf ihre elektrischen Parameter, zentral gesteuert und geregelt wird. Ferner ist im Rahmen dieser zentralen Steuerung und Regelung auch der zeitliche Ablauf des Abscheidens beinhaltet, wobei insbesondere eine zentrale Steuer- und Regeleinrichtung verwendet wird. Diese kann eine Mikroprozessoreinrichtung aufweisen, was eine besonders schnelle Bearbeitung des Steuerns und Regelns ermöglicht und deshalb Fluktuationen der elektrischen Parameter der einzelnen Elektrodenanordnungen oder der Konzentrationen der Bestandteile und Zusätze des Elektrolyten und darüber hinaus zeitliche Verzögerungen weitestgehend vermeidet.

Dazu ist es weiterhin zweckmäßig und vorgesehen, dass zumindest während des Abscheidens die Konzentrationen der Elektrolytbestandteile, insbesondere aber auch der Elektrolytzusätze, erfasst oder gemessen werden.
Dazu werden z. B. sensitive Sensoren, die auf die einzelnen Bestandteile oder Zusätze separat ansprechen, oder auch ionensensitive Elektroden verwendet. All diese Messeinrichtungen liefern Messwerte für die Konzentrationen, die zum rückgekoppelten Steuern und Regeln des Abscheidens und insbesondere des Einstellens der Konzentrationen der Elektrolytbestandteile und -zusätze verwendet werden.

Es ist des weiteren auch die indirekte Ermittlung der Konzentrationen über die sogenannte Nernst-Gleichung vorgesehen. Dabei werden, insbesondere bei den Additiven oder Zusätzen des Elektrolyten, die Potentialänderungen an den Metallelektroden des jeweiligen Additivs erfasst und ausgewertet, was vorteilhafterweise in der Mikroprozessoreinrichtung geschieht.

Als besonders vorteilhaft erweist sich das Verfahren bei der Herstellung von Elektrodensystemen für Metall/Luftsauerstoffbatterien, insbesondere für Zink/Luftsauerstoffbatterien. Dazu ist es vorgesehen, dass an der Abscheideträger-Elektrode aus den Elektrolyten zumindest Zink abgeschieden wird.

Es ist bekannt, dass Blei oder Bleiverbindungen als Elektrolytzusätze, insbesondere also auch Bleisalze, das Abscheiden von Zink bei einem elektrolytischen Abscheideverfahren in bezug auf die Dendritenbildung beeinflusst. Somit kann der Dendritenaufbau bei der Abscheidung von Zink in geeigneter Weise gesteuert und geregelt werden, wenn als Elektrolytzusatz, der von Zusatzelektroden aufgenommen und/oder abgegeben wird, Blei, Bleiverbindungen und insbesondere Bleisalze verwendet werden.

Dabei ist es vorgesehen, dass die Konzentration an Blei bzw. an Bleiverbindungen so in einem Konzentrationsbereich eingestellt und gesteuert wird, dass die sich abscheidende Schicht, insbesondere die Zinkschicht, mechanisch stabilisiert wird und bei Verwendung in einer Batterie nur gering korrodiert und/oder selbstentlädt.

Ferner ist es vorgesehen, dass die Konzentration an Blei oder Bleiverbindungen, insbesondere an Bleisalzen, so eingestellt und gesteuert wird, dass das Bilden von Dendriten beim Abscheiden der Schicht im wesentlichen nicht inhibiert wird.

Grundsätzlich weist die erfindungsgemäße Vorrichtung zum Herstellen einer Schicht für eine Elektrode durch elektrolytisches Abscheiden, insbesondere nach den beschriebenen Verfahren, einen mit einem Elektrolyten füllbaren Elektrolytraum, eine Abscheideträger-Elektrode und eine Gegenelektrodenanordnung auf, welche im Elektrolytraum angeordnet sind und vom Elektrolyten benetzbar sind. Des weiteren ist eine Strom-/Spannungsquelle zum elektrischen Verbinden der Abscheideträger-Elektrode und der Gegenelektrodenanordnung miteinander und zum Beaufschlagen der Abscheideträger-Elektrode und der Gegenelektrodenanordnung mit elektrischem Strom und/oder mit elektrischer Spannung für eine vorbestimmte Zeit sowie mindestens eine Zusatzelektrode zur zeitlichen Steuerung der Elektrolytzusammensetzung vorgesehen.

Die erfindungsgemäße Vorrichtung zum Herstellen einer Schicht für eine Elektrode durch elektrolytisches Abscheiden ist dadurch gekennzeichnet, dass die mindestens eine Zusatzelektrode zur zeitlich gesteuerten Aufnahme und/ oder Abgabe vordefinierter Bestandteile und/oder Zusätze des Elektrolyen lösbar ausgebildet ist.

Mit der erfindungsgemäßen Vorrichtung ist es möglich, zeitlich gesteuert, also zu jedem Zeitpunkt des Abscheidens der Schicht an der Abscheideträger-Elektrode, die Konzentrationen der Bestandteile und/oder der Zusätze des Elektrolyten in wohldefinierter und vorbestimmter Art und Weise einzustellen.

Dies geschieht vorteilhafterweise dadurch, dass die Zusatzelektrode mit einer Strom-/Spannungsquelle verbindbar ist und durch diese zeitlich gesteuert mit elektrischem Strom und/oder mit elektrischer Spannung beaufschlagbar ist. Es ist auf diese Weise in einer Art nebengeordneten Elektrolyse möglich, durch Wahl von Spannung und Strom die Abgabe und/oder Aufnahme bestimmter gewünschter oder unerwünschter Bestandteile und/oder Zusätze im Elektrolyten zeitlich gesteuert besonders einfach einzustellen.
Als Strom-/Spannungsquelle bietet sich dabei z. B. jeweils ein Potentiostat an.

In der Regel ist bei jedem elektrolytischen Prozess, der genau gesteuert und geregelt werden soll, ein Referenzpunkt zumindest für das elektrochemische Potential notwendig. Es ist deshalb in der erfindungsgemäßen Vorrichtung vorgesehen, eine Referenzelektrodenanordnung im Elektrolytraum auszubilden, über welche die Abscheideträger-Elektrode, die Gegenelektrodenanordnung und die Zusatzelektroden mit Bezug auf diese Referenzelektrodenanordnung, insbesondere bezüglich ihrer elektrischen Parameter, einstellbar und steuerbar sind.

Eine besonders einfache koordinierte Steuerung der Vorrichtung ergibt sich, wenn eine zentrale Steuereinrichtung vorgesehen ist, durch welche die elektrische Spannung und/oder der elektrische Strom der Abscheideträger-Elektrode, der Gegenelektrodenanordnung und der Zusatzelektroden in bezug aufeinander und insbesondere in bezug auf die Referenzelektrodenanordnung zeitlich steuer- und regelbar sind.

Eine besonders einfache Verarbeitung ergibt sich in der Vorrichtung, wenn die zentrale Steuereinrichtung eine Mikroprozessoreinrichtung aufweist, weil dann die gesamte Steuerung ohne großen zeitlichen Verzug durchgeführt werden kann.

Obwohl aus dem zeitlichen Verlauf sämtlicher elektrischer Parameter aller Elektrodenanordnungen im Elektrolytraum und weiterhin aus der Anfangszusammensetzung des Elektrolyten die zeitliche Entwicklung der Konzentrationen der Bestandteile und der Zusätze des Elektrolyten prinzipiell abgeleitet werden könnten, ist es besonders einfach, wenn Messeinrichtungen vorgesehen sind, die zur Messung der jeweiligen Konzentrationen bestimmter Bestandteile und/oder Zusätze des Elektrolyten vorgesehen sind. Diese Messeinrichtungen können als ionensensitive Elektroden z. B. als Kalium-, Kalzium- oder pH-Elektrode, oder als für die speziellen Bestandteile oder Zusätze sensitive Sensoren ausgebildet sein.

Eine optimale Steuerung der Vorrichtungen ergibt sich, wenn die zentrale Steuereinrichtung zur Aufnahme der von den Messeinrichtungen gelieferten Daten in bezug auf Konzentrationswerte und/oder der elektrischen Zustandsparameter der Abscheideträger-Elektrode, der Gegenelektrodenanordnung, der Zusatzelektroden und/oder der Referenzelektrodenanordnung ausgebildet ist.

Der Vorteil der erfindungsgemäßen Verfahren und der hierfür ausgebildeten Vorrichtung ist u.a. die Möglichkeit, die Elektrolysebedingungen, d.h. insbesondere die Konzentrationen der als Additive eingesetzten Metalle, exakt zu kontrollieren. Außerdem gestattet das Verpressen der abgeschiedenen Schicht, auf effiziente Art und Weise poröse Elektroden unabhängig vom Träger, z.B. aus einer ursprünglichen dentridischen Schicht, neu aufzubauen, wobei diese Elektroden eine besonders hohe mechanische Stabilität aufweisen.

Nachfolgend wird die Erfindung anhand einer schematischen Zeichnung auf der Grundlage eines bevorzugten Ausführungsbeispiels der Vorrichtung näher erläutert.

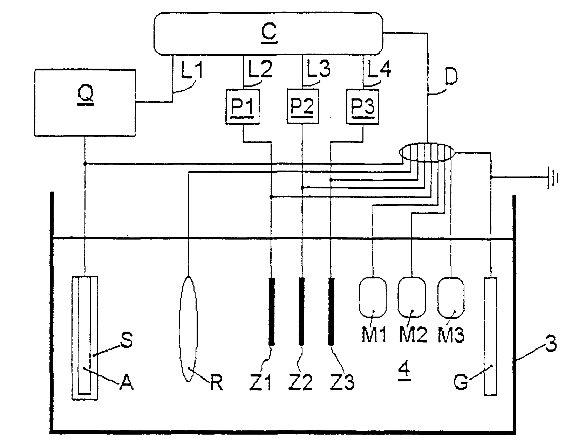

Die einzige Figur zeigt eine erfindungsgemäße Vorrichtung zum Herstellen einer Schicht für eine Elektrode durch elektrolytisches Abscheiden in einer schematischen, geschnittenen Seitenansicht.

In einem Elektrolytraum 3 sind in einem Elektrolyten 4 eine Abscheideträger-Elektrode A und eine Gegenelektrodenanordnung G eingebracht. Über eine zentrale Steuereinrichtung C und eine Strom-/Spannungsquelle Q sind die Abscheideträger-Elektrode A und die Gegenelektrodenanordnung G miteinander elektrisch verbunden, wobei hier die Gegenelektrodenanordnung G auf Masse gehalten wird.

Über die zentrale Steuereinrichtung C werden über eine Steuerleitung L1 Steuersignale an die Strom-/Spannungsquelle Q gegeben, die ihrerseits Strom und Spannung während des Abscheidens der Schicht S an der Abscheideträger-Elektrode A regelt.

Es sind in diesem Ausführungsbeispiel ferner drei Zusatzelektroden Z1, Z2, Z3 vorgesehen, die ihrerseits über Potentiostaten P1, P2 und P3, die ebenfalls von einer zentralen Steuereinrichtung C geregelt werden, elektrisch eingestellt werden. Die Potentiostaten P1, P2 und P3 sind über Steuerleitungen L2, L3, L4 mit der zentralen Steuereinrichtung C verbunden. Als Referenzsystem dient neben dem Masseanschluß die ebenfalls vorgesehene Referenzelektrodenanordnung R. Zur Bestimmung bestimmter Elektrolytbestandteile oder Zusätze sind in dieser bevorzugten Ausführungsform drei ionensensitive Elektroden M1, M2, M3 ausgebildet.

Die zentrale Steuereinrichtung C weist eine Datenleitung oder einen Datenbus D auf. Dieser Datenbus D vereinigt in sich Meßleitungen zum einen von den ionensensitiven Elektroden M1, M2, M3. Zum anderen können aber über diesen Datenbus D auch die zeitliche veränderlichen elektrischen Parameter der Abscheideträger-Elektrode A, der Zusatzelektroden Z1, Z2, Z3, der Gegenelektrodenanordnung G und der Referenzelektrodenanordnung R abgegriffen und in die zentrale Steuereinheit C eingelesen werden.

Über die Vielzahl der so eingelesenen Meßdaten ist ständig der Zustand im Elektrolyten und der Anordnung präsent und auswertbar und kann entsprechend rückgekoppelt gesteuert werden.

Das erfindungsgemäße Verfahren sowie die erfindungsgemäße Vorrichtung zum Herstellen einer Schicht für eine Elektrode sind in erster Linie für den Neuaufbau und die grundlegende Regeneration sogenannter poröser Elektroden, insbesondere von Elektroden zweiter Art, geeignet. Dies sind Elektroden, bei denen zumindest als ein Lade- und/oder Entladeprodukt ein schwer lösliches Salz beteiligt ist.

Beispielsweise können dies bei einer Pb-Elektrode (Blei-Elektrode), PbO, PbO₂ oder PbSO₄ sein. Bei der bekannten Silber-/Silberchlorid-Elektrode dient gerade das AgCl als schwer lösliches Salz im Elektrolyten.

Neben der sogenannten Zink-Elektrode einer Zink-/Luftsauerstoffbatterie können das erfindungsgemäße Verfahren sowie die erfindungsgemäße Vorrichtung natürlich auch auf Elektroden von Sn/Pb-, Sn/SnO₂-, Ag/Zn-, Ni/Cd-, Ni/Metallhydrid-Akkumulatoren oder -Batterien oder dergleichen angewandt werden.

Als Abscheideträger-Elektrode eignen sich z.B. aufgrund ihrer für ein Abschaben der erzeugten Dendriten vorteilhaften glatten Oberfläche sowie aufgrund ihres geringen elektrischen Widerstands Kupferplatten (Cu-Platten) ganz besonders gut. Während des Abscheidevorgangs, also während der Elektrolyse, wird das Trägermaterial, d.h. die Abscheideträger-Elektrode, als Kathode und nicht als Anode, wie während der Entladung, geschaltet. Aus diesem Grunde kann von einer entsprechenden Schutz-Beschichtung, hier z.B. des Kupfers durch Nickel (Ni), abgesehen werden. Generell können sämtliche einfache Streckmetalle, Metallschäume, Metallplatten aber auch Keramiken als Trägermaterial und/oder als elektrischer Abgriff für eine derartige Abscheideträger-Elektrode Verwendung finden.

Werden im alternativen Verfahren die elektrochemisch erzeugten Dendriten nach der Erzeugung nicht von der Abscheideträger-Elektrode entfernt, sondern direkt auf dem Träger verdichtet und/oder verpreßt, so ist bei dem Trägermaterial dann auf eine ausreichende chemische Inertheit, insbesondere gegenüber anodischer Oxidation, zu achten.

Die notwendigen Gegenelektroden können prinzipiell durch sämtliche, mögliche Elektroden gebildet werden, welche elektrochemisch inert gegen eine anodische Oxidation sind.

Das aktive Material der zu regenerierenden Elektrode, insbesondere also das diesbezügliche Metall, muß natürlich im Elektrolyten vorhanden sein, es wird insbesondere in bezug auf die Startkonzentration in Form eines Salzes mechanisch zudosiert.

Alternativ dazu oder auch im Hinblick auf eine aufrechtzuerhaltende Konzentration an aktivem Material im Elektrolyten kann eine entsprechende Metallelektrode als Gegenelektrode eingesetzt werden, deren Material dem der zu regenerierenden Elektrode gerade entspricht und die aus diesem Grunde während des Regenerationsprozesses abgebaut wird, wogegen die zu regenerierende Elektrode gerade in bezug auf das aktive Material aufgebaut wird. So kann insbesondere also eine relativ konstante Konzentration an aktivem, abzuscheidendem Material im Elektrolyten gewährleistet werden. Insbesondere können alte, ausgediente Metallelektroden, die in ihrer elektrischen Kapazität stark abgefallen sind, gerade als Gegenelektrode zum Schließen des Stoffkreislaufes in bezug auf das aktive, abzuscheidende Material verwendet werden.

Der entsprechende Elektrolyt weist vorzugsweise eine Konzentration von etwa 3 bis 10 mol/l auf und ist alkalisch. Besonders geeignet ist ein Elektrolyt, der auf 6 molarer Kalilauge basiert.

Zur Verbesserung z.B. der Korrosionsstabilität und/oder des Entladeverhaltens können den abzuscheidenden Schichten oder Anoden Metalle als Additive zugesetzt werden. Dieser Zusatz erfolgt natürlich während des elektrochemischen Abscheidens durch entsprechende Bestandteile oder Additive im Elektrolyten. Diese Metalle die zugesetzt werden, müssen insbesondere im alkalischen anodisch oxidierbar sein. Sie werden insbesondere über die Zusatzelektroden über anodische Auflösung einer entsprechenden Metallelektrode elektrochemisch zudosiert. Die Startkonzentration dieser Additive kann aber auch durch mechanisches Zudosieren erreicht werden, z.B. über entsprechende Salze in der Elektrolytlösung.

Beispiele für derartige Additiv-Metalle sind Hg, Cd, Ca, Sn, Pb und andere.

Durch das erfindungsgemäße Verfahren und die erfindungsgemäße Vorrichtung kann der Konzentrationsbereich der eben beschriebenen Additive im Elektrolyten in bezug auf die Herstellung loser Dendriten für den Neuaufbau poröser Elektroden nicht nur genauestens reguliert werden, sondern er kann auch über die bisher möglichen Grenzen hinaus ausgeweitet werden. Dadurch ist es zum ersten Mal möglich, durch kurzzeitige Konzentrationserhöhung der Additive über die bestehenden Höchstgrenzen hinaus, insbesondere unmittelbar vor dem Ablösen der bereits abgeschiedenen Dendriten, die Häufigkeit zu erhöhen, mit der die erzeugten Dendriten abgelöst werden, und die Additivkonzentration im aktiven, abgeschiedenen Material zu erhöhen und effektiver in Elektrodenmatrial einzulagern. Es handelt sich dabei um eine Art Oberflächenlegierung des elektrochemisch aktiven, abgeschiedenen Materials.

In bezug auf die Regeneration und den Neuaufbau von Zink-Elektroden für die Zink-/Luftsauerstoffbatterie wird Blei in einer Konzentration zwischen etwa 0,1 bis etwa 5 Gew.-% in die elektrochemisch aktive, abzuscheidende Schicht eingebaut. Die Bleikonzentration im Elektrolyten selbst beträgt während des elektrochemischen Regenerationsprozesses bzw. während des grundlegenden Neuaufbaus der Elektrodenschicht etwa 0,1 bis etwa 2 Gew.-%. Vorzuziehen sind insbesondere Elektroden mit einem Anteil von etwa 1 Gew.-% Blei im Elektrodenmaterial und ca. 0,2 Gew.-% im Elektrolytbad während der Herstellung.

Ein weiterer Vorteil des erfindungsgemäßen Verfahrens und der erfindungsgemäßen Vorrichtung ist, daß die Konzentration des abzuscheidenden Materials im Elektrolyt, insbesondere also das abzuscheidende Metall, genau eingestellt und insbesondere konstant gehalten werden kann. Der Startwert kann, wie bereits beschrieben wurde, durch eine mechanische Zudosierung erreicht werden.

Bei der Herstellung und Regeneration von Zink-Elektroden ist eine Konzentration von etwa 1 bis etwa 100 g/l einstellbar. Besonders gute Ergebnisse werden bei einer Konzentration von etwa 20 g/l erzielt.

Eine Temperierung oder Thermostatisierung des Elektrolysebads zur Einhaltung bestimmter, optimaler Temperaturbereiche kann sinnvoll sein, ist aber nicht zwingend notwendig. Der übliche Temperaturbereich wird sich je nach Umgebungstemperatur sowie aufgrund der Betriebsbedingungen während des Regenerationsprozesses im Bereich von etwa -60° C bis etwa +70° C erstrecken. Die obere Temperaturgrenze wird dabei durch das verwendete Gehäuse und Material bestimmt, wobei prinzipiell der Siedepunkt des Elektrolyten wohl nicht überschritten werden wird.

Die für eine dendritische Abscheidung notwendigen Stromdichten erstrecken sich im Bereich von etwa 100 mA/cm² bis zu einigen A/cm², wobei hier auf die Fläche, an der das Material abgeschieden werden soll, Bezug genommen wird.

Der Abstand zwischen der sogenannten Abscheideträger-Elektrode oder Arbeitselektrode und der Gegenelektrode ist zwar zweitrangig, sollte aber aus Gründen eines möglichst hohen Wirkungsgrades möglichst klein gehalten werden, um ohmsche Verluste zu vermeiden.
Bei der Herstellung von Zink-Dendriten für poröse Elektroden erhält man bei zeitkonstanten Stromdichten von etwa 2 A/cm² besonders gute Ergebnisse.

Bei der Weiterverarbeitung der abgeschiedenen Elektrodenschicht an der Abscheideträger-Elektrode wird die Schicht, insbesondere also die losen Dendriten, zunächst in Wasser und in Sodawasser gewaschen, um Reste des Elektrolyten aus dem elektrochemisch aktiven Material zu entfernen.

Danach kann das elektrochemisch aktive Material, insbesondere also die losen Dendriten, auf einem geeigneten Trägermaterial naß verpreßt werden. Dies wird vorzugsweise bei einem Druck von etwa 5 bis etwa 250 kg/cm² Elektrodenfläche durchgeführt. Besonders günstige Elektrodenoberflächen ergeben sich in bezug auf poröse Zink-Elektroden im Bereich von etwa 100 bis etwa 200 kg/cm².

Die getrocknete, neu beschichtete Elektrode wird danach mit einem feinporigen Separator verschweißt und in einen großporigen Separator, insbesondere in eine Kassette, eingesteckt.

Das Trägermaterial der Abscheideträger-Elektrode bzw. des entsprechenden anderen gewünschten Trägers kann bei Verpressen der naßen Dendriten mit einer Wabenstruktur maskiert werden, um der dann entstehenden Elektrode eine besondere mechanische Stabilität bei der Zyklisierung, d.h. beim zyklischen Ent- und Aufladen zu geben.
Natürlich muß beim Verpressen an der Abscheideträger-Elektrode, d.h. ohne Trägermaterialwechsel, die Maskierung bereits vor der Dendritenerzeugung, d.h. vor dem elektrolytischen Abscheiden, auf das Trägermaterial der Abscheideträger-Elektrode aufgebracht werden. Dabei ist es dann wichtig, daß die entsprechende Maskierung oder Wabenstruktur entweder aus einem nichtleitenden oder aber aus einem durch Beschichtung elektrisch isolierten, vorzugsweise gegen anodische Oxidation elektrochemisch inerten Material gefertigt oder zumindest entsprechend beschichtet worden ist.

Prinzipiell ist die Anwendung des erfindungsgemäßen Verfahrens und der erfindungsgemäßen Vorrichtung auch bei der Regeneration kompakter Elektroden zur Verwendung als Elektroden erster Art, nämlich sogenannter Lösungs-Elektroden, möglich.

Zur Erzielung entsprechender kompakter Abscheidungen sind entsprechend niedrigere Stromdichten einzuhalten, diese liegen im Bereich zwischen etwa 10 bis etwa 100 mA/cm². Ferner kann zusätzlich der Einsatz feinporiger Separatoren zur Unterdrückung elektroosmotischer Effekte und/oder eine kontinuierliche oder intervallartige Konvektion des Elektrolyten notwendig sein.

Ferner sollten sich die elektrochemisch aktiven Flächen der Abscheideträger-Elektrode oder Arbeitselektrode und der Gegenelektroden bei der elektrochemischen Regeneration kompakter Elektroden in etwa größenordnungsmäßig entsprechen. Dies kann insbesondere auch durch eine entsprechende Maskierung der Kathode zur Erreichung einer in etwa gleichmässigen Feldlinienverteilung erreicht werden.

## Patentansprüche

1. Verfahren zum Herstellen einer Schicht für eine Elektrode,
mit den aufeinanderfolgenden Schritten:
- Einbringen einer Abscheideträger-Elektrode (A) in einen mit einem Elektrolyten (4) gefüllten Elektrolytraum (3) mit einer Gegenelektrodenanordnung (G),
- elektrisches Verbinden der Abscheideträger-Elektrode (A) mit der Gegenelektrodenanordnung (G) über eine Strom-/Spannungsquelle (Q),
- elektrolytisches Abscheiden einer Schicht (S) an der Abscheideträger-Elektrode (A) durch Beaufschlagen zumindest der Abscheideträger-Elektrode (A) und der Gegenelektrodenanordnung (G) mit elektrischem Strom und/oder elektrischer Spannung für eine vorbestimmte Zeit,
- Trennen der beschichteten Abscheideträger-Elektrode (A) von der Gegenelektrodenanordnung (G) und
- Entnehmen der beschichteten Abscheideträger-Elektrode (A) aus dem Elektrolytraum (3),
- Steuerung der Zusammensetzung und/oder des Aufbaus der sich an der Abscheideträger-Elektrode (A) abscheidenden Schicht (S) durch Elektrolytzusätze,
**dadurch gekennzeichnet,**
daß die Elektrolytzusätze über Zusatzelektroden (Z1, Z2, Z3) im Elektrolytraum (3) aufgenommen und/oder abgegeben werden und zeitlich gesteuert werden und daß die abgeschiedene Schicht (S) von der Abscheideträger-Elektrode (A) entfernt und auf einen separaten Träger (T) übertragen und verpreßt wird.

2. Verfahren zum Herstellen einer Schicht für eine Elektrode,
mit den aufeinanderfolgenden Schritten:
- Einbringen einer Abscheideträger-Elektrode (A) in einen mit einem Elektrolyten (4) gefüllten Elektrolytraum (3) mit einer Gegenelektrodenanordnung (G),
- elektrisches Verbinden der Abscheideträger-Elektrode (A) mit der Gegenelektrodenanordnung (G) über eine Strom-/Spannungsquelle (Q),
- elektrolytisches Abscheiden einer Schicht (S) an der Abscheideträger-Elektrode (A) durch Beaufschlagen zumindest der Abscheideträger-Elektrode (A) und der Gegenelektrodenanordnung (G) mit elektrischem Strom und/oder elektrischer Spannung für eine vorbestimmte Zeit,
- Trennen der beschichteten Abscheideträger-Elektrode (A) von der Gegenelektrodenanordnung (G) und
- Entnehmen der beschichteten Abscheideträger-Elektrode (A) aus dem Elektrolytraum (3),
- Steuerung der Zusammensetzung und/oder des Aufbaus der sich an der Abscheideträger-Elektrode (A) abscheidenden Schicht (S) durch Elektrolytzusätze,
**dadurch gekennzeichnet,**
daß die Elektrolytzusätze über Zusatzelektroden (Z1, Z2, Z3) im Elektrolytraum (3) aufgenommen und/oder abgegeben werden und zeitlich gesteuert werden und daß die abgeschiedene Schicht (S) an der Abscheideträger-Elektrode (A) verpreßt wird.

3. Verfahren nach einem der Ansprüche 1 oder 2,
**dadurch gekennzeichnet,**
daß zum Komprimieren oder Verpressen ein Druck von etwa 5 bis etwa 250 kg/cm² verwendet wird.

4. Verfahren nach einem der vorhergehenden Ansprüche,
**dadurch gekennzeichnet,**
daß die Schicht (S) auf der Abscheideträger-Elektrode (A) durch dendritisches Wachsen oder in poröser oder in kompakter Form abgeschieden wird.

5. Verfahren nach einem der vorhergehenden Ansprüche,
**dadurch gekennzeichnet,**
daß an der Abscheideträger-Elektrode (A) aus dem Elektrolyten (4) zumindest Zink abgeschieden wird.

6. Verfahren nach einem der vorhergehenden Ansprüche,
**dadurch gekennzeichnet,**
daß als Elektrolytzusatz Blei oder Bleiverbindungen, insbesondere Bleisalze, verwendet werden.

7. Verfahren nach Anspruch 6,
**dadurch gekennzeichnet,**
daß die Konzentration an Blei bzw. an Bleiverbindungen in einem Konzentrationsbereich so eingestellt und gesteuert wird, daß die Schicht (S) mechanisch stabilisiert wird und bei Verwendung in einer Batterie nur gering korrodiert und/oder selbstentlädt.

8. Verfahren nach einem der Ansprüche 6 oder 7,
**dadurch gekennzeichnet,**
daß die Konzentration an Blei oder Bleiverbindungen so eingestellt und gesteuert wird, daß sie das Bilden von Dendriten beim Abscheiden der Schicht (S) im wesentlichen nicht inhibiert.

9. Verfahren nach einem der vorhergehenden Ansprüche,
**dadurch gekennzeichnet,**
daß zum Abscheiden der Schicht (S) eine elektrische Stromdichte von etwa 0,1 bis etwa 10 A/cm² verwendet wird.

10. Verfahren nach Anspruch 9,
**dadurch gekennzeichnet,**
daß bei der Abscheidung von Zink eine elektrische Stromdichte von etwa 2 A/cm² verwendet wird.

11. Verfahren nach einem der vorhergehenden Ansprüche,
**dadurch gekennzeichnet**,
daß die Abscheideträger-Elektrode (A), die Gegenelektrodenanordnung (G) und/oder die Zusatzelektroden (Z1, Z2, Z3) mit Bezug auf eine Referenzelektrodenanordnung (R) gesteuert und eingestellt werden.

12. Verfahren nach einem der vorhergehenden Ansprüche,
**dadurch gekennzeichnet**,
daß das Einstellen der Abscheideträger-Elektrode (A), der Gegenelektrodenanordnung (G) und der Zusatzelektroden (Z1, Z2, Z3) in bezug aufeinander und/oder das zeitliche Ablaufen des Abscheidens zentral gesteuert und geregelt wird, wobei insbesondere eine zentrale Steuer- und Regeleinrichtung (C), z.B. eine Mikroprozessoreinrichtung, verwendet wird.

13. Verfahren nach einem der vorhergehenden Ansprüche,
**dadurch gekennzeichnet,**
daß zumindest während des Abscheidens die Konzentration der Elektrolytbestandteile, insbesondere der Elektrolytzusätze, erfaßt werden und
daß dazu insbesondere für die einzelnen Bestandteile sensitive Sensoren z.B. ionensensitive Elektroden (M1, M2, M3) verwendet werden.

14. Verfahren nach Anspruch 13,
**dadurch gekennzeichnet,**
daß die gemessenen Konzentrationen zum rückgekoppelten Steuern und Regeln des Abscheidens und insbesondere des Konzentrationseinstellens der Elektrolytbestandteile und -zusätze verwendet werden.

15. Vorrichtung zum Herstellen einer Schicht für eine Elektrode durch elektrolytisches Abscheiden, insbesondere zur Durchführung des Verfahrens nach einem der Ansprüche 1 bis 14,
mit einem Elektrolytraum (3) welcher mit einem Elektrolyten (4) füllbar ist,
mit einer Abscheideträger-Elektrode (A) und einer Gegenelektrodenanordnung (G) welche im Elektrolytraum (3) angeordnet sind und vom Elektrolyten (4) benetzbar sind, und
mit einer Strom-/Spannungsquelle (Q) zum elektrischen Verbinden der Abscheideträger-Elektrode (A) und der Gegenelektrodenanordnung (G) miteinander und zum Beaufschlagen der Abscheideträger-Elektrode (A) und der Gegenelektrodenanordnung (G) mit elektrischem Strom und/oder mit elektrischer Spannung für eine vorbestimmte Zeit und
mit mindestens einer Zusatzelektrode (Z1, Z2, Z3) zur zeitlichen Steuerung der Elektrolytzusammensetzung
**dadurch gekennzeichnet,**
daß die Zusatzelektrode (Z1, Z2, Z3) zur zeitlich gesteuerten Aufnahme und/oder Abgabe vordefinierter Bestandteile und/oder Zusätze zum Elektrolyten (4) lösbar ausgebildet ist.

16. Vorrichtung nach Anspruch 15,
**dadurch gekennzeichnet,**
daß die Zusatzelektrode (Z1, Z2, Z3) mit einer Strom-/ Spannungsquelle (P1, P2, P3) verbindbar und durch diese zeitlich gesteuert mit elektrischem Strom und/ oder mit elektrischer Spannung beaufschlagbar ist.

17. Vorrichtung nach einem der Ansprüche 15 oder 16,
**dadurch gekennzeichnet,**
daß die Strom-/Spannungsquelle (P1, P2, P3) der mindestens einen Zusatzelektrode (Z1, Z2, Z3) als Potentiostat ausgebildet ist.

18. Vorrichtung nach einem der Ansprüche 15 bis 17,
**dadurch gekennzeichnet,**
daß eine Referenzelektrodenanordnung (R) vorgesehen ist, und
daß die Abscheideträger-Elektrode (A), die Gegenelektrodenanordnung (G) und/oder die Zusatzelektroden (Z1, Z2, Z3) mit Bezug auf die Referenzelektrodenanordnung (R) steuerbar und einstellbar sind.

19. Vorrichtung nach einem der Ansprüche 15 bis 18,
**dadurch gekennzeichnet,**
daß eine zentrale Steuer- und Regeleinrichtung (C) vorgesehen ist, durch welche die elektrische Spannung und der elektrische Strom der Abscheideträger-Elektrode (A) der Gegenelektrodenanordnung (G) und der mindestens einen Zusatzelektrode (Z1, Z2, Z3) in bezug aufeinander und insbesondere in bezug auf die Referenzelektrodenanordnung (R) zeitlich steuerbar und regelbar sind.

20. Vorrichtung nach Anspruch 19,
**dadurch gekennzeichnet,**
daß die zentrale Steuereinrichtung (C) eine Mikroprozessoreinrichtung aufweist.

21. Vorrichtung nach einem der Ansprüche 15 bis 20,
**dadurch gekennzeichnet,**
daß Meßeinrichtungen (M1, M2, M3), insbesondere ionensensitive Elektroden, zur Messung der Konzentration bestimmter Bestandteile und/oder Zusätze des Elektrolyten (4) vorgesehen sind.

22. Vorrichtung nach Anspruch 21,
**dadurch gekennzeichnet,**
daß die zentrale Steuereinrichtung (C) zur Aufnahme von den Meßeinrichtungen (M1, M2, M3) gelieferter Daten bezüglich der Konzentrationswerte und/oder der elektrischen Zustandswerte der Abscheideträger-Elektrode (A), der Gegenelektrodenanordnung (G), der Zusatzelektroden (Z1, Z2, Z3) und/oder der Referenzelektrodenanordnung (R) ausgebildet ist.

23. Vorrichtung nach einem der Ansprüche 15 bis 22,
**dadurch gekennzeichnet,**
daß die Referenzelektrodenanordnung (R) eine Kalomelelektrode und/oder eine reversible Metallelektrode aufweist.

## Claims

1. Method for the production of a coating for an electrode, having the successive steps of:
- introducing a deposit support electrode (A) into an electrolyte space (3) filled with an electrolyte (4) and with a counterelectrode configuration (G),
- electrical connecting the deposit support electrode (A) to the counterelectrode configuration (G) by means of a current/voltage source (Q),
- electrolytic depositing a coating (S) on the deposit support electrode (A) by supplying current and/or voltage for a predetermined time to at least the deposit support electrode (A) and counterelectrode configuration (G),
- separating the coated deposit support electrode (A) from the counterelectrode configuration (G) and
- removing the coated deposit support electrode (A) from the electrolyte space (3),
- controlling the composition and/or structure of the coating (S) deposited on the deposit support electrode (A) by electrolyte additives,
**characterized in that**
the electrolyte additives are taken up and/or delivered and time-controlled by means of additional electrodes (Z1, Z2, Z3) in the electrolyte space (3) and that the deposited coating (S) is removed from the deposit support electrode (A) and transferred and pressed on a separate support (T).

2. Method for the production of a coating for an electrode, having the successive steps of:
- introducing a deposit support electrode (A) into an electrolyte space (3) filled with an electrolyte (4) and with a counterelectrode configuration (G),
- electrical connecting the deposit support electrode (A) to the counterelectrode configuration (G) by means of a current/voltage source (Q),
- electrolytic depositing a coating (S) on the deposit support electrode (A) by supplying current and/or voltage for a predetermined time to at least the deposit support electrode (A) and counterelectrode configuration (G),
- separating the coated deposit support electrode (A) from the counterelectrode configuration (G) and
- removing the coated deposit support electrode (A) from the electrolyte space (3) and
- controlling the composition and/or structure of the coating (S) deposited on the deposit support electrode (A) by electrolyte additives,
**characterized in that**
the electrolyte additives are taken up and/or delivered and time-controlled by means of additional electrodes (Z1, Z2, Z3) in the electrolyte space (3) and that the deposited coating (S) is pressed on the deposit support electrode (A).

3. Method according to one of the claims 1 or 2,
**characterized in that**
a pressure of approximately 5 to approximately 250 kg/cm² is used for compression or pressing.

4. Method according to one of the preceding claims,
**characterized in that**
the coating (S) is deposited on the deposit support electrode (A) by dendritic growth or in porous or compact form.

5. Method according to one of the preceding claims,
**characterized in that**
at least zinc is deposited from the electrolyte (4) at the deposit support electrode (A).

6. Method according to one of the preceding claims,
**characterized in that**
lead or lead compounds, particularly lead salts are used as the electrolyte additive.

7. Method according to claim 6,
**characterized in that**
the concentration of lead or lead compounds is so adjusted and controlled in a concentration range that the coating (S) is mechanically stabilized and is only subject to slight corrosion and/or self-discharging when used in a battery.

8. Method according to one of the claims 6 or 7,
**characterized in that**
the concentration of lead or lead compounds is so adjusted and controlled that it substantially does not inhibit the formation of dendrites during the deposition of the coating (S).

9. Method according to one of the preceding claims,
**characterized in that**
an electric current density of approximately 0.1 to approximately 10 A/cm² is used for depositing the coating (S).

10. Method according to claim 9,
**characterized in that**
an electric current density of approximately 2 A/cm² is used when depositing zinc.

11. Method according to one of the preceding claims,
**characterized in that**
the deposit support electrode (A), the counterelectrode configuration (G) and/or the additional electrodes (Z1, Z2, Z3) are controlled and adjusted with reference to a reference electrode configuration (R).

12. Method according to one of the preceding claims,
**characterized in that**
the adjustment of the deposit support electrode (A), the counterelectrode configuration (G) and the additional electrodes (Z1, Z2, Z3) with respect to one another and/or the time sequence of deposition is centrally controlled and regulated, wherein in particular a central control and regulating device (C), e.g. a microprocessor, is used.

13. Method according to one of the preceding claims,
**characterized in that**
at least during deposition the concentration of the electrolyte constituents particularly electrolyte additives is determined and that for this purpose sensors sensitive to the individual constituents, such as ion-sensitive electrodes (M1, M2, M3) are used.

14. Method according to claim 13,
**characterized in that**
the measured concentrations are used for the feedback control and regulation of deposition and in particular the concentration setting of the electrolyte constituents and additives.

15. Apparatus for the production of a coating for an electrode by electrolytic deposition, particularly for performing the method according to one of the claims 1 to 14,
having an electrolyte space (3) fillable with an electrolyte (4),
having a deposit support electrode (A) and a counterelectrode configuration (G) placed in the electrolyte space (3) and wettable by the electrolyte (4), and
having a current/voltage source (G) for the electrical connection of the deposit support electrode (A) and the counterelectrode configuration (G) to one another and for supplying current and/or voltage for a predetermined time to the deposit support electrode (A) and the counterelectrode configuration (G) and having at least one additional electrode (Z1, Z2, Z3) for the time control of the electrolyte composition,
**characterized in that**
the additional electrode (Z1, Z2, Z3) is
soluble for a time-controlled taking up and/or delivery of previously defined constituents and/or additives to the electrolyte (4).

16. Apparatus according to claim 15,
**characterized in that**
the additional electrode (Z1, Z2, Z3) is connectable to a current/voltage source (P1, P2, P3) and through the latter can be supplied in time-controlled manner with current and/or voltage.

17. Apparatus according to one of the claims 15 or 16,
**characterized in that**
the current/voltage source (P1, P2, P3) of the at least one additional electrode (Z1, Z2, Z3) is constructed as a potentiostat.

18. Apparatus according to one of the claims 15 to 17,
**characterized in that**
a reference electrode configuration (R) is provided and in that the deposit support electrode (A), the counterelectrode configuration (G) and/or the additional electrode (Z1, Z2, Z3) are controllable and adjustable with reference to the reference electrode configuration (R).

19. Apparatus according to one of the claims 15 to 18,
**characterized in that**
a central control and regulating device (C) is provided, permitting the time control and regulation of the voltage and current of the deposit support electrode (A), the counterelectrode configuration (G) and the at least one additional electrode (Z1, Z2, Z3) with respect to one another and in particular with respect to the reference electrode configuration (R).

20. Apparatus according to claim 19,
**characterized in that**
the central control device (C) has a microprocessor.

21. Apparatus according to one of the claims 15 to 20,
**characterized in that**
measuring devices (M1, M2, M3), particularly ion-sensitive electrodes, for measuring the concentration of specific constituents and/or additives of the electrolyte (4) are provided.

22. Apparatus according to claim 21,
**characterized in that**
the central control device (C) is constructed for receiving data supplied by the measuring devices (M1, M2, M3) concerning the concentration values and/or the electric state values of the deposit support electrode (A), of the counterelectrode configuration (G), of the additional electrode (Z1, Z2, Z3) and of the reference electrode configuration (R).

23. Apparatus according to one of the claims 15 to 22,
**characterized in that**
the reference electrode configuration (R) has a calomel electrode and/or a reversible metal electrode.

## Revendications

1. Procédé de fabrication d'une couche pour une électrode, comprenant les étapes successives consistant à :
- insérer une électrode-support de dépôt (A) dans un compartiment (3) à électrolyte rempli d'un électrolyte (4) avec un système de contre-électrode (G),
- raccorder électriquement l'électrode-support de dépôt (A) au système de contre-électrode (G) par l'intermédiaire d'une source (Q) de courant/tension,
- déposer par voie électrolytique une couche (S) sur l'électrode-support de dépôt (A) par exposition au moins de l'électrode-support de dépôt (A) et du système de contre-électrode (G) à un courant électrique et/ou à une tension électrique pendant une durée prédéterminée,
- séparer l'électrode-support de dépôt (A) ainsi revêtue du système de contre-électrode (G), et
- retirer l'électrode-support de dépôt (A) ainsi revêtue du compartiment (3) à électrolyte,
- contrôler la composition et/ou la constitution de la couche (S) se déposant sur l'électrode-support de dépôt (A) au moyen d'additifs d'électrolyte,
***caractérisé en ce que*** les additifs d'électrolyte sont captés et/ou délivrés par l'intermédiaire d'électrodes additionnelles (Z1, Z2, Z3) dans le compartiment (3) à électrolyte et sont contrôlés dans le temps, et
***en ce que*** la couche (S) déposée est retirée de l'électrode-support de dépôt (A) et est transférée et pressée sur un support (T) séparé.

2. Procédé de fabrication d'une couche pour une électrode, comprenant les étapes successives consistant à :
- insérer une électrode-support de dépôt (A) dans un compartiment (3) à électrolyte rempli d'un électrolyte (4) avec un système de contre-électrode (G),
- raccorder électriquement l'électrode-support de dépôt (A) au système de contre-électrode (G) par l'intermédiaire d'une source de courant/tension (Q),
- déposer par voie électrolytique une couche (S) sur l'électrode-support de dépôt (A) par exposition au moins de l'électrode-support de dépôt (A) et du système de contre-électrode (G) à un courant électrique et/ou à une tension électrique pendant une durée prédéterminée,
- séparer l'électrode-support de dépôt (A) ainsi revêtue du système de contre-électrode (G), et
- retirer l'électrode-support de dépôt (A) ainsi revêtue du compartiment (3) à électrolyte,
- contrôler la composition et/ou la constitution de la couche (S) se déposant sur l'électrode-support de dépôt (A) au moyen d'additifs d'électrolyte,
***caractérisé en ce que*** les additifs d'électrolyte sont captés et/ou délivrés par l'intermédiaire d'électrodes additionnelles (Z1, Z2, Z3) dans le compartiment (3) à électrolyte et sont contrôlés dans le temps, et ***en ce que*** la couche (S) déposée est pressée sur l'électrode-support de dépôt (A).

3. Procédé selon l'une quelconque des Revendications 1 ou 2, ***caractérisé en ce que***, pour la compression ou le pressage, on emploie une pression d'environ 5 à environ 250 kg/cm².

4. Procédé selon l'une quelconque des Revendications précédentes, ***caractérisé en ce que*** la couche (S) est déposée sous forme poreuse ou compacte par croissance dendritique sur l'électrode-support de dépôt (A).

5. Procédé selon l'une quelconque des Revendications précédentes, ***caractérisé en ce qu***'au moins du zinc est déposé sur la couche-support de dépôt (A) depuis l'électrolyte (4).

6. Procédé selon l'une quelconque des Revendications précédentes, ***caractérisé en ce que*** le plomb ou des composés du plomb, en particulier des sels de plomb, sont employés comme additif d'électrolyte.

7. Procédé selon la Revendication 6, ***caractérisé en ce que*** la concentration en plomb ou en composés du plomb est ajustée et contrôlée dans une plage de concentration de telle manière que la couche (S) est stabilisée mécaniquement et ne subit qu'une faible corrosion et/ou une faible décharge spontanée quand elle est employée dans une batterie.

8. Procédé selon l'une quelconque des Revendications 6 ou 7, ***caractérisé en ce que*** la concentration en plomb ou en composés du plomb est ajustée et contrôlée de telle manière que, pour l'essentiel, elle n'inhibe pas la formation de dendrites lors du dépôt de la couche (S).

9. Procédé selon l'une quelconque des Revendications précédentes, ***caractérisé en ce que***, pour déposer la couche (S), on utilise une densité de courant électrique d'environ 0,1 à environ 10 A/cm².

10. Procédé selon la Revendication 9, ***caractérisé en ce que***, lors d'un dépôt de zinc, on utilise une densité de courant électrique d'environ 2 A/cm².

11. Procédé selon l'une quelconque des Revendications précédentes, ***caractérisé en ce que*** l'électrode-support de dépôt (A), le système de contre-électrode (G) et/ou les électrodes additionnelles (Z1, Z2, Z3) sont commandés et ajustés par rapport à un système d'électrode de référence (R).

12. Procédé selon l'une quelconque des Revendications précédentes, ***caractérisé en ce que*** le réglage de l'électrode-support de dépôt (A), du système de contre-électrode (G) et des électrodes additionnelles (Z1, Z2, Z3) les uns par rapport aux autres et/ou le déroulement du dépôt dans le temps est commandé et régulé de manière centralisée, en particulier en employant un dispositif central de commande et de régulation (C), par exemple un dispositif à microprocesseur.

13. Procédé selon l'une quelconque des Revendications précédentes, ***caractérisé en ce qu***'au moins pendant le dépôt, la concentration des composants de l'électrolyte, en particulier des additifs d'électrolyte, est détectée et ***en ce qu***'on utilise en particulier pour cela des capteurs sensibles aux différents composants, par exemple des électrodes (M1, M2, M3) sensibles à des ions.

14. Procédé selon la Revendication 13, ***caractérisé en ce que*** les concentrations mesurées sont utilisées pour contrôler et réguler rétroactivement le dépôt, et en particulier le réglage de concentration des composants et additifs de l'électrolyte.

15. Dispositif de fabrication d'une couche pour une électrode par dépôt électrolytique, en particulier pour appliquer le procédé selon l'une quelconque des Revendications 1 à 14,
avec un compartiment (3) à électrolyte qui peut être rempli avec un électrolyte (4),
avec une électrode-support de dépôt (A) et un système de contre-électrode (G) qui sont placés dans le compartiment (3) à électrolyte et peuvent être mouillés par l'électrolyte (4), et
avec une source de courant/tension (Q) pour raccorder électriquement l'électrode-support de dépôt (A) et le système de contre-électrode (G) l'un à l'autre et pour exposer l'électrode-support de dépôt (A) et le système de contre-électrode (G) à un courant électrique et/ou à une tension électrique pendant une durée prédéterminée, et
avec au moins une électrode additionnelle (Z1, Z2, Z3) pour commander dans le temps la composition de l'électrolyte,
***caractérisé en ce que*** l'électrode additionnelle (Z1, Z2, Z3) est conformée soluble afin de capter et/ou de délivrer de manière contrôlée dans le temps des composants et/ou des additifs prédéterminés à l'électrolyte (4).

16. Dispositif selon la Revendication 15, ***caractérisé en ce que*** l'électrode additionnelle (Z1, Z2, Z3) peut être reliée à une source de courant/tension (P1, P2, P3) et peut être exposée par celle-ci de manière contrôlée dans le temps à un courant électrique et/ou à une tension électrique.

17. Dispositif selon l'une quelconque des Revendications 15 ou 16, ***caractérisé en ce que*** la source de courant/tension (P1, P2, P3) de l'électrode additionnelle (Z1, Z2, Z3) au nombre d'au moins une est conformée en potentiostat.

18. Dispositif selon l'une quelconque des Revendications 15 à 17, ***caractérisé en ce qu***'un système d'électrode de référence (R) est prévu, et ***en ce que*** l'électrode-support de dépôt (A), le système de contre-électrode (G) et/ou les électrodes additionnelles (Z1, Z2, Z3) sont commandés et ajustés par rapport au système d'électrode de référence (R).

19. Dispositif selon l'une quelconque des Revendications 15 à 18, ***caractérisé en ce qu***'un dispositif central de commande et de réglage (C) est prévu, par lequel la tension électrique et le courant électrique de l'électrode-support de dépôt (A), du système de contre-électrode (G) et de l'électrode additionnelle (Z1, Z2, Z3) au nombre d'au moins une peuvent être commandés et réglés dans le temps les uns par rapport aux autres et en particulier par rapport au système d'électrode de référence (R).

20. Dispositif selon la Revendication 19, ***caractérisé en ce que*** le dispositif central de commande (C) comporte un dispositif à microprocesseur.

21. Dispositif selon l'une quelconque des Revendications 15 à 20, ***caractérisé en ce que*** des dispositifs de mesure (M1, M2, M3) sont prévus, en particulier des électrodes sensibles à des ions, pour mesurer la concentration de certains composants et/ou additifs de l'électrolyte (4).

22. Dispositif selon la Revendication 21, ***caractérisé en ce que*** le dispositif central de commande (C) est conformé pour recevoir les données fournies par les dispositifs de mesure (M1, M2, M3) et relatives aux valeurs de concentration et/ou aux valeurs d'état électriques de l'électrode-support de dépôt (A), du système de contre-électrode (G) des électrodes additionnelles (Z1, Z2, Z3) et/ou du système d'électrode de référence (R).

23. Dispositif selon l'une quelconque des Revendications 15 à 22, ***caractérisé en ce que*** le système d'électrode de référence (R) présente une électrode au calomel et/ou une électrode métallique réversible.
